# EUROPEAN PATENT SPECIFICATION

(11) **EP 1 754 388 B1**
(45) Date of publication and mention of the grant of the patent: **14.01.2015**
(21) Application number: 05702358.2
(22) Date of filing: 27.01.2005
(51) Int. Cl.: H04W 8/24

(54) **CELL UPDATE MESSAGE INDICATING WHETHER USER DATA OR CONTROL DATA IS TRANSMITTED UPLINK, AND RESPECTIVE PROCEDURES FOR HANDLING THESE TWO TYPES OF DATA**
ZELLENAKTUALISIERUNGSNACHRICHT UM ANZUZEIGEN, OB BENUTZERDATEN ODER STEUERDATEN SIGNALAUFWÄRTS GESENDET WERDEN, UND JEWEILIGE VERFAHREN ZUR ABWICKLUNG DIESER BEIDEN ARTEN VON DATEN
MESSAGE DE MISE A JOUR DE CELLULES INDIQUANT SI DES DONNEES UTILISATEURS OU DES DONNEES DE CONTROLE SONT TRANSMISES EN LIAISON MONTANTE, ET PROCEDURES RESPECTIVES DE GESTION DE CES DEUX TYPES DE DONNEES

(30) Priority: 08.06.2004 US 862468
(43) Date of publication of application: 21.02.2007
(73) Proprietor: Nokia Corporation, 02610 Espoo (FI)
(72) Inventor: MELLA, Perttu, FIN-01830 Lepsama (FI); KARHU, Jyri, FIN-01620 Vantaa (FI); MARJELUND, Pekka, FIN-08680 Muijala (FI); SAKKO, Vesa, FIN-01450 Vantaa (FI); VUORINEN, Petri, J., 02940 Espoo (FI); NAUHA, Jukka, 90230 Oulu (FI); KOHONEN, Pekka, FIN-02760 Espoo (FI)
(74) Representative: Style, Kelda Camilla Karen
(86) International application number: PCT/IB2005/000201
(87) International publication number: WO 2005/122605

(56) References cited:
- EP-A1- 1 389 889
- EP-A1- 1 475 983
- WO-A1-00/76245
- US-A1- 2004 224 688

## Description

### Field of the Invention

The present invention relates to a method of communication between user equipment and a node of a network. The present invention also relates to user equipment and a network node.

### Background of the Invention

A communication system is a facility which enables communication between two or more entities such as user terminal equipment and/or network entities and other nodes associated with a communication system. The communication may comprise for example, communication of voice, electronic mail (email), text messages, data, multimedia and so on. The communication may be provided by a fixed line and/or wireless communication interfaces. A feature of wireless communication systems is that they provide mobility for the users thereof.

An example of a communications system providing wireless communication is a public land mobile network (PLMN). An example of the fixed line system is a public switched telephone network (PSTN).

The communications system typically operates in accordance with a given standard or specification which sets out what the various elements of the system are permitted to do and how that should be achieved. For example, the standard of specification may define if the user, or more precisely user equipment is provided with a circuit switched server or a packet switched server or both. Communication protocols and/or parameters which should be used for the connection are also typically defined. For example the manner in which communications are implemented between the user equipment and the elements of the communication networks is typically based on the predefined communication protocol. In other words, a specific set of "rules" on which the communication can be based needs to be defined to enable the user equipment to communicate via the communication systems.

Various different standards have been proposed or are being proposed for telecommunication networks. Examples of such proposals are the so called third generation (3G) communication systems such as UMTS (Universal Mobile Telecommunications System). This may use CDMA (Code Division Multiple Access). This means that the wireless communications between the user equipment and a node uses a spreading code to distinguish communications. GSM (Global System for Mobile communications) is another known standard which uses a time division multiple access method for communication between user equipment and a network node.

In the currently proposed UMTS third generation system as defined in the specification TS25.331, there is a cell update message which is sent by the user equipment to the radio access network. This message will indicate possible causes for the cell update. There are predefined causes which can be indicated. One of these causes is that there is "uplink data transmission". This value is intended to cover both the need for user data transmission and control data transmission from the user equipment to the radio access network.

With the current proposal, the radio network controller (RNC) is not able to perform different procedures for these two different cases of uplink data transmission. This is because required information as to which case of uplink data transmission is the cause of the cell update is missing. Typically, the transmission of control data can be performed in the CELL_FACH (forward access channel) stage and the transmission of user data, when there is a large enough amount of data, is transmitted in the CELL_DCH dedicated channel state. The radio network controller is not able to perform state transition and non real time NRT DCH allocation directly based on the cell up date message. This is because the results of the traffic volume measurements are not available. Thus, the radio access network does not know based on this cell up date message whether the user equipment is going to perform for example an AMR (adaptive multi rate) call.

With the current proposal, the signalling can be summarised as follows:
The user equipment sends a cell update message to the radio network controller which sends a confirmation message back to the user equipment. The user equipment then sends a radio access network mobility information confirmation message to the RNC which replies with a measurement control message. The user equipment provides a measurement report to the RNC. The RNC makes a packet scheduling decision and allocated dedicated channel resources if required. The radio bearer is then reconfigured.

This has the disadvantage in that there is a lot of signalling required which is both time consuming and uses radio resource.

EP 1475979, which is relevant for the purposes of Article 54(3) EPC only discloses a method of establishing a connection between a mobile terminal and a network in a mobile radio system. The mobile terminal sends the radio access network at least one establishment cause and/or a call establishment cause.

### Summary of the Invention

It is an aim of embodiment of the present invention to address one or more of these problems discussed.

According to one aspect of the invention, there is provided a method according to claim 1.

According to a further aspect of the invention there is provided a cellular telecommunications network, according to claim 16.

According to another aspect of the present invention there is provided user equipment according to claim 15

According to another aspect of the invention, there is provided a network node according to claim 14.

According to another aspect there is a method according to claim 17.

### Brief Description of Drawings

For a better understanding of the present invention and as to how the same may be carried into effect, reference will now be made by way of example only to the accompanying drawings in which:
Figure 1 shows a network within which embodiments of the present invention can be implemented;
Figure 2 shows the current signalling used; and
Figure 3 shows the signalling used in embodiments of the present invention.

### Detailed Description of Embodiments of the Present Invention

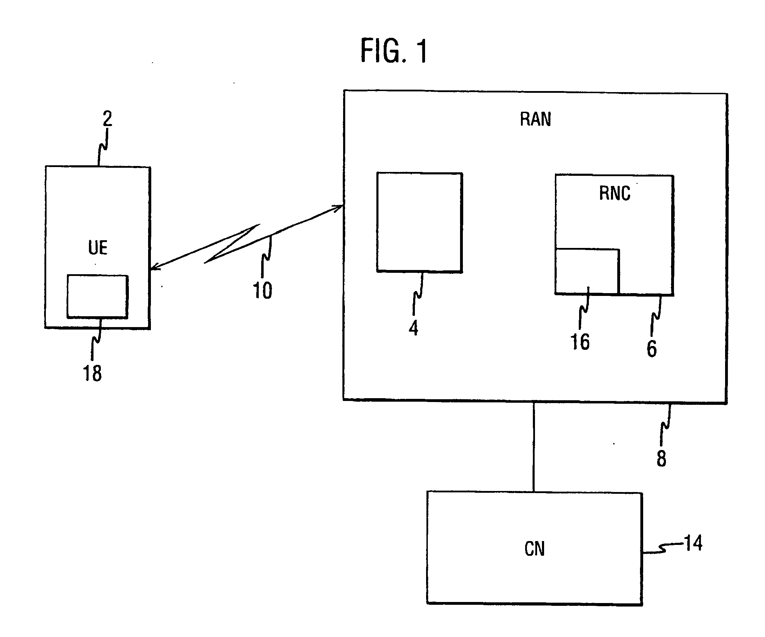

Reference is made first to figure 1 which shows a system in which embodiments of the present invention can be implemented. Embodiments of the present invention will be described in the context of a third generation (3G) system and in particular the UMTS system using wideband CDMA. However, it should be appreciated that embodiments of the present invention can be applied to any other communication system including other third generation systems, future standards and even for example currently used standards such as GSM or the like.

The system comprises user equipment 2. The user equipment 2 can take any suitable form. The user equipment 2 can be a mobile telephone, a computer (fixed or portable), personal data assistance (PDA), organisers or the like.

The user equipment 2 is arranged to communicate with a radio access network 8 via a wireless connection 10. The radio access network is sometimes referred to as a UTRAN (UMTS terrestrial radio access network) in third generation systems.

The wireless connection between the user equipment 2 and the radio access network 8 may be at any suitable frequencies such as for example a radio frequency.

The radio access network 8 consists of a base station entity 4 which is sometimes referred to as node B. For the purpose of this document, the term base station will be used and is intended to cover any suitable entity which receives wireless transmissions from the user equipment and transmits wireless communications to the user equipment via the wireless interface 10.

The radio access network 8 also has a control element 6. Depending on the standard, the control element can be referred to a radio network controller in the case of the UMTS system, or base station controller in the case of a GSM system. The term radio network controller 6 is intended to cover any such control entity.

In the arrangement shown in figure 1, the control function is provided separately from the base station function with the single control entity controlling a number of base stations. In other embodiments of the present invention, the base stations may each incorporate part of the control function.

The radio access network is arranged to communicate with a core network 12. The core network 12 is well known and will not be described further.

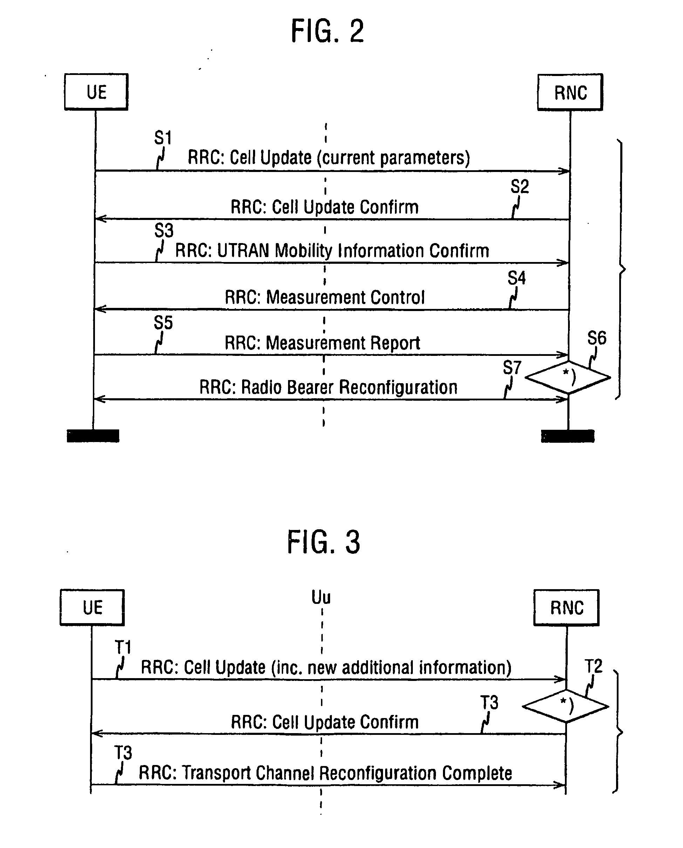

To assist the understanding of the present invention, reference will now be made to figure 2 which shows the signalling currently used in the RRC protocol specification (radio resource control) as defined in the 3G specification TS 25.331,

The procedure outlined below is carried out in the CELL_FACH state. In the, the user equipment can perform the following actions: if the user equipment is in a service area maintain up to date system information as broadcast by the base station, perform cell reselection, can perform a measurement process according to measurement control information, act on RRC messages received on various other channels and so on. It should be noted that in the CELL_FACH channel, the DCH is available.

In step S1, a radio resource control RRC message is sent from the user equipment to the radio network controller. This is a cell update message. The cell up date message will include a field for the cell update cause. The current proposals list the following possibilities as a cell update cause; cell reselection; periodic cell update, up link data transmission, paging response, re-entered service area, radio link failure, RLC unrecoverable error. This example, is particularly concerned where the cell up date cause is due to uplink data transmission.

In step S2, the RNC sends the user equipment an RRC cell update confirmation message. This message confirms the cell update procedure.

In step S3, the user equipment sends a UTRAN mobility information confirmation message. Again, this is a radio resource control message. This message is used to confirm the new UTRAN mobility information for the user equipment.

In step S4, the RRC message measurement control is sent from the RNC to the user equipment. The measurement control message is used by the RNC to control a measurement in the user equipment. The following information is used to control the user equipment measurement and the measurement results reporting:
1. Measurement identity - a reference number that is used by the RNC when setting up, modifying or releasing the measurement and by the user equipment in the measurement report.
2. Measurement command - the command can be:
   Set up - set up a new measurement.
   Modify a previously defined measurement for example to change a reporting criteria.
   Release to stop a measurement and clear all information in the user equipment that is related to that measurement.
3. Measurement Type - one of the types measured below describing what the user equipment should measure, presence or absence of the following control information depends on the measurement type.
4. Measurement Objects - the objects on which the user equipment shall measure measurement quantities and corresponding object information.
5. Measurement Quantity - the quantity the user equipment shall measure on the measurement object. This also includes the filtering of the measurements.
6. Reporting quantities - the quantities the user equipment shall include in the report in addition to the quantities that are mandatory to the report for this specific event.

In this case the measurements relate to the up link traffic volume.

In step S5, the user equipment sends to the RNC a RRC measurement report message. The measurement report will include information on the measurements made. In particular it will indicate the amount of uplink traffic.

In step S6, the RNC will make packet scheduling decisions and allocation of dedicated channel resources based on the results of the traffic volume measurements. This may mean that the state transitions from CELL_FACH to the CELL_DCH and DCH allocation, if appropriate, will be carried out. For example, the transition to the CELL_DCH state and DCH allocation will occur if there is a relatively large amount of user data which needs to be transmitted. If, on the other hand, the user equipment needs to transmit control data or a relatively small amount of user data, then transmission will take place in the CELL_FACH state.

In the CELL_FACH state RACH (random access channels/FACH i.e. common channels are used and in the CELL_DCH state, dedicated DCH is used.

In step S7, the radio bearer will be reconfigured in dependence on the decision made in step S6.

Reference is now made to figure 3 which shows the signal flow in an embodiment of the present invention. In step T1, the RRC message sent is a cell update message. However, this cell update message includes two new cause values. Instead of having a single value for uplink data transmission, this is replaced by two values, uplink user data transmission and uplink control data transmission. Thus, if the cause of the cell up date is uplink user data transmission or is uplink control data transmission, this information will be included in the cell update RRC message. By providing the RNC with information as to whether there is uplink data transmission or control data transmission, the RNC is able to perform different kind of procedures in response to the inclusion of one of the cause values. In particular, the decision making in the UTRAN is speeded up. Based on this piece of information in the cell update cause, the RNC can make a decision as to whether or not the data from the user equipment needs to be transmitted in the CELL-FACH state or in the CELL_DCH state.

In step T2 the user will make the packet scheduling decision and allocation of dedicated channel resources if required. This will take into account the information received in step T1. This contrasts with the method shown in Figure 2 where the RNC is not in a position to make this decision only in response to the cell update message.

In step T3, the RRC radio resource control message cell update confirmation is sent from the RNC to the user equipment.

In step T4, the transport channel reconfiguration is completed. Transport channel reconfiguration is a subset of the radio bearer reconfiguration procedure. Which one is used depends on which parameters need to change. Most typical is to use radio bearer reconfiguration procedure also in this improved solution but in some cases the transport channel reconfiguration procedure is valid. If radio bearer parameters or radio bearer mapping changes in state transition: radio bearer reconfiguration complete message terminates improved signalling chart.

Embodiments of the present invention are particularly applicable where the user equipment is already configured to perform the traffic volume measurement so that the user equipment is able to select the correct cell up date cause i.e. to select one of up link user data transmission or up link control data transmission.

The user equipment will select up link user data transmission if user data is to be transmitted. The user equipment will select the up link control data transmission value if control data is to be transmitted. In one embodiment of the present invention, a distinction can be made depending on the amount of user data. For relatively small amounts of user data, the up link control data transmission value can be selected whilst for relatively large amounts of user data, the up link user data transmission can be selected.

In one alternative embodiment of the invention, the call update cause may alternatively or additionally include the RRC connection establishment cause information element. Based on this information, the UTRAN knows if the UE needs to establish for example a new RAB. This means that it is possible for the UTRAN to perform the necessary procedures to establish the RAB without having to wait for further information.

Examples of establishment cause are listed below:
Originating Conversational Call,
Originating Streaming Call,
Originating Interactive Call,
Originating Background Call,
Originating Subscribed traffic Call,
Terminating Conversational Call,
Terminating Streaming Call,
Terminating Interactive Call,
Terminating Background Call,
Emergency Call,
Inter-RAT (radio access technology) cell re-selection,
Inter-RAT cell change order,
Registration, Detach,
Originating High Priority Signalling,
Originating Low Priority Signalling,
Call re-establishment,
Terminating High Priority Signalling,
Terminating Low Priority Signalling,
Terminating - cause unknown

In another embodiment of the invention, the cell update message may additionally or alternatively include the measurement identity information element discussed in relation to Figure 2 as well as the traffic volume measured results list information element. This will for example indicate the amount of uplink traffic. This information allows the RNC to perform faster state transitions and DCH allocation decisions since it is not necessary to wait for the measurement report RRC message discussed in relation to Figure 2 from the UE. This will require that the UE is configured to make the traffic volume measurement.

In other embodiments of the invention, any other common channels may be used for the control information and/or small amounts of user data. Likewise any dedicated channel may be used in for the user data. It should be appreciated that in other embodiments of the invention any other suitable channel can be used for the control information or the user information, the channels be dedicated, common or shared channels or any other channel. To a certain extent the channel selection will be dependent on the standard in which the invention is implemented.

Embodiments of the present invention allow the RNC to perform more optimal state transitions and DCH allocations in accordance with the need of the case. The RNC can make the decisions faster and require less signalling. This means that the radio resource is not unnecessarily used.

Embodiments of the present invention may require the RRC signalling entity 16 to be modified. The RRC signalling entity 16 may be provided by a processor optionally in conjunction with a memory.

The user equipment 2 may need to be modified so as to be able to select the new parameters. This may be in response to some form of traffic analysis in terms of quantity and/or type. This will be provided by the signal processor 18 of the user equipment.

Embodiments of the present invention may find application in any suitable communications system and not just UMTS which may have a number of different variants.

## Claims

1. A method of communications in a cellular telecommunications network, comprising:
selecting information indicating a case of an uplink data transmission that is a cause of a cell update, wherein
said information indicating the case of the uplink data transmission that is the cause of the cell update is selected from one of information indicating that the cause of the cell update is user data transmission and information indicating that the cause of the cell update is control data transmission; and
sending a cell update message from a user equipment (2) to a network node (8), said cell update message comprising the cell update cause.

2. A method as claimed in claim 1, wherein said node (8) comprises a base station.

3. A method as claimed in any preceding claim, wherein said cell update message is a radio resource control message.

4. A method as claimed in any preceding claim, wherein said first procedure comprises transmitting data from the user equipment (2) to the network node using a common channel.

5. A method as claimed in claim 4, wherein said common channel is a Forward Access Channel.

6. A method as claimed in any preceding claim, wherein said second procedure comprises transmitting data from the user equipment (2) to the network node (8) using a dedicated channel.

7. A method as claimed in any preceding claim, wherein said first procedure is used if user data exceeding at least a certain amount or if any user data is to be transmitted from said user equipment (2) to said node (8).

8. A method as claimed in any preceding claim, wherein said second procedure is used if control data and/or user data falling below a certain amount of data is to be transmitted from said user equipment (2) to said node (8).

9. A method as claimed in any preceding claim, comprising the step of determining in said user equipment (2) if said cause of said cell update is an uplink data transmission and if so determining if the cause is to be indicated as user data transmission or control data transmission.

10. A method as claimed in claim 9, wherein said determining if the cause is to be indicated as user data transmission or control data transmission comprises determining at least one of data amount and type.

11. A method as claimed in any preceding claim, wherein said using step is carried out by at least one of said network node and a control node.

12. A method as claimed in claim 11, wherein said control node comprise a radio network controller (6).

13. A method as claimed in any preceding claim, wherein said cell update message further comprises at least one of:
a cause of establishment of a connection;
a measurement identity; and
traffic volume information.

14. User equipment (2) for use in a cellular telecommunications network, comprising
means for selecting information indicating a case of an uplink data transmission that is a cause of a cell update, wherein
said information indicating the case of the uplink data transmission that is the cause of the cell update is selected from one of information indicating that the cause if the cell update is user data transmission and information indicating that the cause of the cell update is control data transmission; and
means for sending a cell update message to a network node (8), said cell update message comprising the cell update cause.

15. A node (8) for use in a telecommunications system comprising:
means for receiving a cell update message from a user equipment (2), said cell update message comprising information indicating a case of an uplink data transmission that is a cause of a cell update, the information indicating that the case of the uplink data transmission that is the cause of the cell update being selected from one of information indicating that the cause of the cell update is user data transmission and information indicating that the cause of the cell update is control data transmission; and
means for determining that a first procedure for data transmission is to be used when said cell update message comprises information indicating that the cause of the cell update message is user data transmission and that a second procedure is to be used for data transmission when said cell update message comprises information indicating that the cause of the cell update message is control data transmission.

16. A cellular telecommunications network, comprising user equipment according to claim 14 and at least one network node according to claim 15.

17. A method of communications in a cellular telecommunications network, comprising:
receiving a cell update message from a user equipment (2), said cell update message comprising information indicating a case of an uplink data transmission that is a cause of a cell update, the information indicating that the case of the uplink data transmission that is the cause of the cell update being selected from one of information indicating that the cause of the cell update is user data transmission and information indicating that the cause of the cell update is control data transmission;
determining in response to the received cell update message that a first procedure for data transmission is to be used when said cell update message comprises information indicating that the cause of the cell update message is user data transmission and that a second different procedure is to be used for the data transmission when said cell update message comprises information indicating that the cell update is control data transmission.

## Patentansprüche

1. Kommunikationsverfahren in einem Zellen-Telekommunikationsnetz, das Folgendes umfasst:
Auswählen von Informationen, die einen Fall einer Aufwärtsstrecken-Datenübertragung angeben, die eine Ursache einer Zellenaktualisierung ist, wobei die Informationen, die den Fall der Aufwärtsstrecken-Datenübertragung angeben, die die Ursache der Zellenaktualisierung ist, ausgewählt werden aus Informationen, die angeben, dass die Ursache der Zellenaktualisierung eine Anwenderdatenübertragung ist, und aus Informationen, die angeben, dass die Ursache der Zellenaktualisierung eine Steuerdatenübertragung ist; und
Senden einer Zellenaktualisierungsnachricht von einem Anwendergerät (2) zu einem Netzknoten (8), wobei die Zellenaktualisierungsnachricht die Zellenaktualisierungsursache enthält.

2. Verfahren nach Anspruch 1, wobei der Knoten (8) eine Basisstation umfasst.

3. Verfahren nach einem vorhergehenden Anspruch, wobei die Zellenaktualisierungsnachricht eine Funkbetriebsmittel-Steuernachricht ist.

4. Verfahren nach einem vorhergehenden Anspruch, wobei die erste Prozedur das Übertragen von Daten von dem Anwendergerät (2) zu dem Netzknoten unter Verwendung eines gemeinsamen Kanals umfasst.

5. Verfahren nach Anspruch 4, wobei der gemeinsame Kanal ein Vorwärtszugriffskanal ist.

6. Verfahren nach einem vorhergehenden Anspruch, wobei die zweite Prozedur das Übertragen von Daten von dem Anwendergerät (2) zu dem Netzknoten (8) unter Verwendung eines dedizierten Kanals umfasst.

7. Verfahren nach einem vorhergehenden Anspruch, wobei die erste Prozedur verwendet wird, falls Anwenderdaten eine erste bestimmte Menge überschreiten oder falls irgendwelche Anwenderdaten von dem Anwendergerät (2) zu dem Knoten (8) übertragen werden sollen.

8. Verfahren nach einem vorhergehenden Anspruch, wobei die zweite Prozedur verwendet wird, falls Steuerdaten und/oder Anwenderdaten die weniger als eine bestimmte Menge von Daten enthalten, von dem Anwendergerät (2) zu dem Knoten (8) übertragen werden sollen.

9. Verfahren nach einem vorhergehenden Anspruch, das den Schritt des Bestimmens in dem Anwendergerät (2), ob die Ursache der Zellenaktualisierung eine Aufwärtsstrecken-Datenübertragung ist, und wenn ja, des Bestimmens, ob die Ursache als Anwenderdatenübertragung oder als Steuerdatenübertragung angegeben werden soll, umfasst.

10. Verfahren nach Anspruch 9, wobei das Bestimmen, ob die Ursache als Anwenderdatenübertragung oder Steuerdatenübertragung angegeben werden soll, das Bestimmen der Datenmenge und/oder des Datentyps umfasst.

11. Verfahren nach einem vorhergehenden Anspruch, wobei der Verwendungsschritt durch den Netzknoten und/oder einen Steuerknoten ausgeführt wird.

12. Verfahren nach Anspruch 11, wobei der Steuerknoten eine Funknetzsteuereinheit (6) umfasst.

13. Verfahren nach einem vorhergehenden Anspruch, wobei die Zellenaktualisierungsnachricht ferner Folgendes umfasst:
eine Ursache für den Aufbau einer Verbindung; und/oder
eine Messungskennung; und/oder
Verkehrsvolumeninformationen.

14. Anwendergerät (2) für die Verwendung in einem Zellen-Telekommunikationsnetz, das Folgendes umfasst:
Mittel zum Auswählen von Informationen, die einen Fall einer Aufwärtsstrecken-Datenübertragung, die eine Ursache einer Zellenaktualisierung ist, angeben, wobei die Informationen, die den Fall der Aufwärtsstrecken-Datenübertragung, die die Ursache der Zellenaktualisierung ist, angeben, gewählt werden aus Informationen, die angeben, dass die Ursache der Zellenaktualisierung eine Anwenderdatenübertragung ist,
und aus Informationen, die angeben, dass die Ursache der Ziffernaktualisierung eine Steuerdatenübertragung ist; und
Mittel zum Senden einer Zellenaktualisierungsnachricht zu einem Netzknoten (8), wobei die Zellenaktualisierungsnachricht die Zellenaktualisierungsursache enthält.

15. Netzknoten (8) für die Verwendung in einem Telekommunikationssysteme, der Folgendes umfasst:
Mittel zum Empfangen einer Zellenaktualisierungsnachricht von einem Anwendergerät (2), wobei die Zellenaktualisierungsnachricht Informationen enthält, die einen Fall einer Aufwärtsstrecken-Datenübertragung, die eine Ursache einer Zellenaktualisierung ist, angeben, wobei die Informationen, die angeben, dass der Fall der Aufwärtsstrecken-Datenübertragung die Ursache der Zellenaktualisierung ist, gewählt werden aus Informationen, die angeben, dass die Ursache der Zellenaktualisierung eine Anwenderdatenübertragung ist, und aus Informationen, die angeben, dass die Ursache der Zellenaktualisierung eine Steuerdatenübertragung ist; und
Mittel zum Bestimmen, dass eine erste Prozedur für die Datenübertragung verwendet werden soll, wenn die Zellenaktualisierungsnachricht Informationen enthält, die angeben, dass die Ursache der Zellenaktualisierungsnachricht eine Anwenderdatenübertragung ist, und dass eine zweite Prozedur verwendet werden soll, wenn die Zellenaktualisierungsnachricht Informationen enthält, die angeben, dass die Ursache der Zellenaktualisierungsnachricht eine Steuerdatenübertragung ist.

16. Zellen-Telekommunikationsnetz, das ein Anwendergerät nach Anspruch 14 und wenigstens einen Netzknoten nach Anspruch 15 umfasst.

17. Kommunikationsverfahren in einem Zellen-Telekommunikationsnetz, das Folgendes umfasst:
Empfangen einer Zellenaktualisierungsnachricht von einem Anwendergerät (2), wobei die Zellenaktualisierungsnachricht Informationen enthält, die einen Fall einer Aufwärtsstrecken-Datenübertragung, die eine Ursache einer Zellenaktualisierung ist, angeben, wobei die Informationen, die angeben, dass der Fall der Aufwärtsstrecken-Datenübertragung die Ursache der Zellenaktualisierung ist, ausgewählt werden aus Informationen, die angeben, dass die Ursache der Zellenaktualisierung eine Anwenderdatenübertragung ist, und aus Informationen, die angeben, dass die Ursache der Zellenaktualisierung eine Steuerdatenübertragung ist; und
Bestimmen in Reaktion auf die empfangene Zellenaktualisierungsnachricht, dass eine erste Prozedur für die Datenübertragung verwendet werden soll, wenn die Zellenaktualisierungsnachricht Informationen enthält, die angeben, dass die Ursache der Zellenaktualisierung eine Anwenderdatenübertragung ist, und dass eine zweite, andere Prozedur für die Datenübertragung verwendet werden soll, wenn die Zellenaktualisierungsnachricht Informationen enthält, die angeben, dass die Zellenaktualisierung eine Steuerdatenübertragung ist.

## Revendications

1. Procédé de communications dans un réseau de télécommunications cellulaire, comprenant :
la sélection d'informations indiquant un cas de transmission de données de liaison montante qui est une cause d'actualisation de cellule, dans lequel
lesdites informations indiquant le cas de transmission de données de liaison montante qui est la cause de l'actualisation de cellule sont sélectionnées parmi des informations indiquant que la cause de l'actualisation de cellule est une transmission de données d'utilisateur et des informations indiquant que la cause de l'actualisation de cellule est une transmission de données de commande ; et
l'envoi d'un message d'actualisation de cellule depuis un équipement utilisateur (2) à un noeud de réseau (8), ledit message d'actualisation de cellule comprenant la cause de l'actualisation de cellule.

2. Procédé selon la revendication 1, dans lequel ledit noeud (8) comprend une station de base.

3. Procédé selon l'une quelconque des revendications précédentes, dans lequel ledit message d'actualisation de données est un message de commande de ressources radio.

4. Procédé selon l'une quelconque des revendications précédentes, dans lequel ladite première procédure comprend la transmission de données depuis l'équipement utilisateur (2) au noeud de réseau en utilisant un canal commun.

5. Procédé selon la revendication 4, dans lequel ledit canal commun est un Canal d'Accès Direct.

6. Procédé selon l'une quelconque des revendications précédentes, dans lequel ladite seconde procédure comprend la transmission de données depuis l'équipement utilisateur (2) au noeud de réseau (8) en utilisant un canal dédié.

7. Procédé selon l'une quelconque des revendications précédentes, dans lequel ladite première procédure est utilisée si des données d'utilisateur dépassent au moins une certaine quantité ou si des données d'utilisateur doivent être transmises depuis l'équipement utilisateur (2) audit noeud (8).

8. Procédé selon l'une quelconque des revendications précédentes, dans lequel ladite seconde procédure est utilisée si des données de commande et/ou des données d'utilisateur inférieures à une certaine quantité de données doivent être transmises depuis l'équipement utilisateur (2) audit noeud (8).

9. Procédé selon l'une quelconque des revendications précédentes, comprenant l'étape de détermination dans ledit équipement utilisateur (2) que ladite cause de ladite actualisation de cellule est ou non une transmission de données de liaison montante et dans ce cas, de détermination que la cause doit être indiquée comme une transmission de données d'utilisateur ou une transmission de données de commande.

10. Procédé selon la revendication 9, dans lequel ladite détermination que la cause doit être indiquée comme une transmission de données d'utilisateur ou une transmission de données de commande comprend la détermination d'au moins l'un d'une quantité et d'un type de données.

11. Procédé selon l'une quelconque des revendications précédentes, dans lequel ladite étape d'utilisation est exécutée par au moins l'un dudit noeud de réseau et d'un noeud de commande.

12. Procédé selon la revendication 11, dans lequel ledit noeud de commande comprend un contrôleur de réseau radio (6).

13. Procédé selon l'une quelconque des revendications précédentes, dans lequel ledit message d'actualisation de cellule comprend en outre au moins l'une :
d'une cause d'établissement de connexion ;
d'une identité de mesure ; et
d'informations de volume de trafic.

14. Equipement utilisateur (2) destiné à être utilisé dans un réseau de télécommunications cellulaires, comprenant
un moyen de sélection d'informations indiquant un cas de transmission de données de liaison montante qui est une cause d'actualisation de cellule, dans lequel
lesdites informations indiquant le cas de la transmission de données de liaison montante qui est la cause de l'actualisation de cellule sont sélectionnées parmi des informations indiquant que la cause de l'actualisation de cellule est une transmission de données d'utilisateur et des informations indiquant que la cause de l'actualisation de cellule est une transmission de données de commande ; et
un moyen d'envoi d'un message d'actualisation de cellule depuis un noeud de réseau (8), ledit message d'actualisation de cellule comprenant la cause de l'actualisation de cellule.

15. Noeud de réseau (8) destiné à être utilisé dans un système de télécommunications comprenant :
un moyen de réception d'un message d'actualisation de cellule depuis un équipement utilisateur (2), ledit message d'actualisation de cellule comprenant des informations indiquant un cas de transmission de données de liaison montante qui est une cause d'actualisation de cellule, les informations indiquant que le cas de la transmission de données de liaison montante qui est la cause de l'actualisation de cellule étant sélectionnées parmi des informations indiquant que la cause de l'actualisation de cellule est une transmission de données d'utilisateur et des informations indiquant que la cause de l'actualisation de cellule est une transmission de données de commande ; et
un moyen de détermination qu'une première procédure de transmission de données doit être utilisée quand ledit message d'actualisation de cellule comprend des informations indiquant que la cause de l'actualisation de cellule est une transmission de données d'utilisateur et qu'une seconde procédure doit être utilisée pour la transmission de données quand ledit message d'actualisation de cellule comprend des informations indiquant que la cause de l'actualisation de cellule est une transmission de données de commande.

16. Réseau de télécommunications cellulaires, comprenant un équipement utilisateur selon la revendication 14 et au moins un noeud de réseau selon la revendication 15.

17. Procédé de communications dans un réseau de télécommunications cellulaire, comprenant :
la réception d'un message d'actualisation de cellule depuis un équipement utilisateur (2), ledit message d'actualisation de cellule comprenant des informations indiquant un cas de transmission de données de liaison montante qui est une cause d'actualisation de cellule, les informations indiquant que le cas de la transmission de données de liaison montante qui est la cause de l'actualisation de cellule étant sélectionnées parmi des informations indiquant que la cause de l'actualisation de cellule est une transmission de données d'utilisateur et des informations indiquant que la cause de l'actualisation de cellule est une transmission de données de commande ; et
la détermination en réponse au message d'actualisation de cellule reçu qu'une première procédure de transmission de données doit être utilisée quand ledit message d'actualisation de cellule comprend des informations indiquant que la cause de l'actualisation de cellule est une transmission de données d'utilisateur et qu'une seconde procédure doit être utilisée pour la transmission de données quand ledit message d'actualisation de cellule comprend des informations indiquant que la cause de l'actualisation de cellule est une transmission de données de commande.
